# EUROPEAN PATENT APPLICATION

(11) **EP 4 742 574 A1**
(43) Date of publication of application: **13.05.2026**
(21) Application number: 24850498.7
(22) Date of filing: 14.03.2024
(51) Int. Cl.: H04L 1/1812

(54) **RETRANSMISSION METHOD AND APPARATUS**

(30) Priority: 10.08.2023 CN 202311010407
(71) Applicant: Honor Device Co., Ltd., Shenzhen, Guangdong 518040 (CN)
(72) Inventor: ZHANG, Jian, Shenzhen, Guangdong 518040 (CN)
(74) Representative: Gill Jennings & Every LLP
(86) International application number: PCT/CN2024/081771
(87) International publication number: WO 2025/030838

(57) **Abstract**

Embodiments of this application provide a retransmission method and an apparatus. The method includes: receiving first indication information sent by a network device; and retransmitting, based on the first indication information, at least two PUSCHs sent on different TOs in a first CG periodicity. Retransmission scheduling is performed on a plurality of PUSCHs in one CG periodicity by using the first indication information, so that signaling overheads of retransmission and system power consumption can be effectively reduced.

## Description

This application claims priority to Chinese Patent Application No. 202311010407.8, filed with the China National Intellectual Property Administration on August 10, 2023 and entitled "RETRANSMISSION METHOD AND APPARATUS", which is incorporated herein by reference in its entirety.

### TECHNICAL FIELD

This application relates to the field of communication, and in particular, to a retransmission method and an apparatus.

### BACKGROUND

Semi-persistent scheduling is a scheduling manner in which a transmission resource is periodically preconfigured, and may periodically reserve a CG resource for a terminal device through a CG configuration.

However, if CG resource reservation is performed in each CG periodicity based on maximum traffic volume of a single transmission of the terminal device, system capacity is limited. To improve the system capacity, when considering enhancing the semi-persistent scheduling, one manner is to split one PUSCH in one CG periodicity into a plurality of PUSCHs for sending.

However, when a bit error occurs and retransmission is performed, retransmission scheduling needs to be performed for each retransmitted PUSCH by using a separate piece of DCI, resulting in high signaling overheads of the retransmission

### SUMMARY

Embodiments of this application provide a retransmission method and an apparatus, applied to the field of communication technologies.

According to a first aspect, an embodiment of this application provides a retransmission method, applied to a terminal device. The method includes:
receiving first indication information sent by a network device; and
retransmitting, based on the first indication information, at least two physical uplink shared channels PUSCHs sent on different transmission occasions TOs in a first configured grant CG periodicity.

In this implementation, retransmission scheduling is performed on a plurality of PUSCHs in one CG periodicity by using the first indication information, so that signaling overheads of retransmission and system power consumption can be effectively reduced.

In a possible design, the first indication information includes at least one slot interval and at least one piece of time domain position indication information.

The retransmitting, based on the first indication information, the at least two physical uplink shared channels PUSCHs sent on the different transmission occasions TOs in the first configured grant CG periodicity includes:
determining a plurality of first slots based on the slot interval;
respectively determining first time domain resources in the plurality of first slots based on the time domain position indication information; and
respectively retransmitting the PUSCHs based on the first time domain resources in the first slots.

In this implementation, the slot interval and the time domain position indication information are configured in the first indication information, so that resource configuration for the retransmission scheduling of the plurality of PUSCHs can be effectively implemented based on the first indication information.

In a possible design, the first indication information includes one slot interval and one piece of time domain position indication information.

The plurality of first slots include a start slot indicated by the slot interval and at least one available slot adjacent to the start slot, where the available slot is a slot used for uplink sending.

The first time domain resources in the plurality of first slots are all indicated by the time domain position indication information.

In a possible design, the first indication information includes one slot interval and time domain position indication information respectively corresponding to the PUSCHs.

The plurality of first slots include a start slot indicated by the slot interval and at least one available slot adjacent to the start slot.

The time domain position indication information respectively corresponding to the PUSCHs is respectively used for indicating first time domain resources in first slots respectively corresponding to the PUSCHs.

In a possible design, the first indication information includes slot intervals respectively corresponding to the PUSCHs and time domain position indication information respectively corresponding to the PUSCHs.

The plurality of first slots include slots respectively indicated by the slot intervals respectively corresponding to the PUSCHs.

The time domain position indication information respectively corresponding to the PUSCHs is respectively used for indicating first time domain resources in first slots respectively corresponding to the PUSCHs.

The foregoing various configuration manners of the slot interval and the time domain position indication information each may effectively implement resource scheduling for retransmission of the plurality of PUSCHs based on one piece of first indication information, so that the signaling overheads and system power consumption can be effectively reduced.

In a possible design, the method further includes:
retransmitting, if a first PUSCH having no corresponding time domain position indication information exists in the at least two PUSCHs, the first PUSCH by using a time domain resource corresponding to an unused TO.

In this implementation, when determining that some unused TOs may be used for the retransmission of the PUSCHs, the network device may default values of some time domain position indication information, so that data volume of the first indication information is reduced and the signaling overheads are further reduced.

In a possible design, the method further includes:
retransmitting, if a second PUSCH having no corresponding time domain position indication information and/or no corresponding slot interval exists in the at least two PUSCHs, the second PUSCH by using a time domain resource corresponding to an unused TO.

In this implementation, when determining that some unused TOs may be used for the retransmission of the PUSCHs, the network device may default values of some slot intervals and/or time domain position indication information, so that data volume of the first indication information is reduced and the signaling overheads are further reduced.

In a possible design, the first indication information further includes a hybrid automatic repeat request HARQ process number.

The HARQ process number is equal to a HARQ ID of a 1^{st} to-be-retransmitted PUSCH in the first CG periodicity.

Alternatively, the HARQ process number is equal to a HARQ ID of a 1^{st} PUSCH in the first CG periodicity.

In a possible design, the first indication information further includes a new data indicator NDI, the NDI includes N bits, the N bits are sequentially used for indicating whether each PUSCH starting from a third PUSCH in the first CG periodicity needs to be retransmitted, the third PUSCH is a PUSCH whose HARQ ID is equal to the HARQ process number, and N is a quantity of TOs in the first CG periodicity.

In a possible design, when an i^{th} bit in the NDI is 1, it indicates that a PUSCH corresponding to the i^{th} bit needs to be retransmitted.

When the i^{th} bit in the NDI is 0, it indicates that the PUSCH corresponding to the i^{th} bit does not need to be retransmitted, where a value range of i is 1 to N.

The HARQ process number and the NDI are configured in the first indication information, so that whether the PUSCHs in the first CG periodicity need to be retransmitted can be effectively indicated. In this way, retransmission of a plurality of PUSCHs may be indicated by using one piece of indication information.

In a possible design, the first indication information further includes a redundancy version, the redundancy version includes at least two bit groups, and the bit groups are respectively used for indicating redundancy versions respectively corresponding to the PUSCHs.

In a possible design, the method further includes:
receiving first configuration information sent by the network device, where the first configuration information includes a configuration parameter, and the configuration parameter is used for indicating whether the first indication information is used for scheduling retransmission of a plurality of PUSCHs in one CG periodicity.

A specific scheduling situation of the first indication information may be flexibly set by setting the configuration parameter, to be specific, whether the first indication information is specifically used for scheduling one PUSCH or is used for scheduling a plurality of PUSCHs, so that a requirement of flexible scheduling in an actual implementation process can be met.

In a possible design, the configuration parameter is used for indicating that the first indication information is used for scheduling retransmission of a plurality of PUSCHs in one CG periodicity.

In a possible design, the configuration parameter is used for indicating to dynamically determine whether the first indication information is used for scheduling retransmission of a plurality of PUSCHs in one CG periodicity.

A T^{th} bit in a first field in the first indication information is used for dynamically indicating whether the first indication information is used for scheduling retransmission of a plurality of PUSCHs in one CG periodicity, where T is an integer greater than or equal to 0.

Whether the first indication information is used for scheduling retransmission of a plurality of PUSCHs in one CG periodicity is dynamically indicated by using the configuration parameter and the bit in the first field, so that the data volume of the first indication information can be flexibly adjusted based on an actual retransmission scheduling situation.

In a possible design, the first indication information is downlink control information DCI.

In a possible design, the first indication information is scrambled by using a configured scheduling radio network temporary identifier CS-RNTI.

In a possible design, the first configuration information is a radio resource control RRC message.

According to a second aspect, an embodiment of this application provides a retransmission method, applied to a network device. The method includes:
sending first indication information to a terminal device; and
receiving, based on the first indication information, at least two PUSCHs in a first CG periodicity that are retransmitted by the terminal device, where the at least two PUSCHs are PUSCHs sent on different TOs in the first CG periodicity.

In a possible design, the first indication information includes at least one slot interval and at least one piece of time domain position indication information.

The receiving, based on the first indication information, the at least two PUSCHs in the first CG periodicity that are retransmitted by the terminal device includes:
determining a plurality of first slots based on the slot interval;
respectively determining first time domain resources in the plurality of first slots based on the time domain position indication information; and
respectively receiving the retransmitted PUSCHs based on the first time domain resources in the plurality of first slots.

In a possible design, the first indication information includes one slot interval and one piece of time domain position indication information.

The plurality of first slots include a start slot indicated by the slot interval and at least one available slot adjacent to the start slot, where the available slot is a slot used for uplink sending.

The first time domain resources in the plurality of first slots are all indicated by the time domain position indication information.

In a possible design, the first indication information includes one slot interval and time domain position indication information respectively corresponding to the PUSCHs.

The plurality of first slots include a start slot indicated by the slot interval and at least one available slot adjacent to the start slot.

The time domain position indication information respectively corresponding to the PUSCHs is respectively used for indicating first time domain resources in first slots respectively corresponding to the PUSCHs.

In a possible design, the first indication information includes slot intervals respectively corresponding to the PUSCHs and time domain position indication information respectively corresponding to the PUSCHs.

The plurality of first slots include slots respectively indicated by the slot intervals respectively corresponding to the PUSCHs.

The time domain position indication information respectively corresponding to the PUSCHs is respectively used for indicating first time domain resources in first slots respectively corresponding to the PUSCHs.

In a possible design, the method further includes:
receiving, if a first PUSCH having no corresponding time domain position indication information exists in the at least two PUSCHs, the first PUSCH by using a time domain resource corresponding to an unused TO.

In a possible design, the method further includes:
receiving, if a second PUSCH having no corresponding time domain position indication information and/or no corresponding slot interval exists in the at least two PUSCHs, the second PUSCH by using a time domain resource corresponding to an unused TO.

In a possible design, the first indication information further includes a HARQ process number.

The HARQ process number is equal to a HARQ ID of a 1^{st} to-be-retransmitted PUSCH in the first CG periodicity.

Alternatively, the HARQ process number is equal to a HARQ ID of a 1^{st} PUSCH in the first CG periodicity.

In a possible design, the first indication information further includes an NDI, the NDI includes N bits, the N bits are sequentially used for indicating whether each PUSCH starting from a third PUSCH in the first CG periodicity needs to be retransmitted, and the third PUSCH is a PUSCH whose HARQ ID is equal to the HARQ process number.

In a possible design, when an i^{th} bit in the NDI is 1, it indicates that a PUSCH corresponding to the i^{th} bit needs to be retransmitted.

When the i^{th} bit in the NDI is 0, it indicates that the PUSCH corresponding to the i^{th} bit does not need to be retransmitted, where a value range of i is 1 to N.

In a possible design, the first indication information further includes a redundancy version, the redundancy version includes at least two bit groups, and the bit groups are respectively used for indicating redundancy versions respectively corresponding to the PUSCHs.

In a possible design, the method further includes:
sending first configuration information to the terminal device, where the first configuration information includes a configuration parameter, and the configuration parameter is used for indicating whether the first indication information is used for scheduling retransmission of a plurality of PUSCHs in one CG periodicity.

In a possible design, the configuration parameter is used for indicating that the first indication information is used for scheduling retransmission of a plurality of PUSCHs in one CG periodicity.

In a possible design, the configuration parameter is used for indicating to dynamically determine whether the first indication information is used for scheduling retransmission of a plurality of PUSCHs in one CG periodicity.

A T^{th} bit in a first field in the first indication information is used for dynamically indicating whether the first indication information is used for scheduling retransmission of a plurality of PUSCHs in one CG periodicity, where T is an integer greater than or equal to 0.

In a possible design, the first indication information is DCI.

In a possible design, the first indication information is scrambled by using a CS-RNTI.

In a possible design, the first configuration information is an RRC message.

According to a third aspect, an embodiment of this application provides a retransmission apparatus. The apparatus includes:
a receiving module, configured to receive first indication information sent by a network device; and
a sending module, configured to retransmit, based on the first indication information, at least two physical uplink shared channels PUSCHs sent on different transmission occasions TOs in a first configured grant CG periodicity.

According to a fourth aspect, an embodiment of this application provides a retransmission apparatus. The apparatus includes:
a sending module, configured to send first indication information to a terminal device; and
a receiving module, configured to receive, based on the first indication information, at least two PUSCHs in a first CG periodicity that are retransmitted by the terminal device, where the at least two PUSCHs are PUSCHs sent on different TOs in the first CG periodicity.

According to a fifth aspect, an embodiment of this application provides a terminal device. The terminal device may also be referred to as a terminal (terminal), a user equipment (user equipment, UE), a mobile station (mobile station, MS), a mobile terminal (mobile terminal, MT), or the like. The terminal device may be a mobile phone (mobile phone), a smart TV, a wearable device, a tablet computer (Pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like.

The terminal device includes a processor and a memory. The memory stores computer-executable instructions. The processor executes the computer-executable instructions stored in the memory, to enable the terminal device to perform the method according to the first aspect.

According to a sixth aspect, an embodiment of this application provides a network device. The network device may be a base station (Base Transceiver Station, referred to as BTS for short) in a GSM system or a CDMA system, may be a base station (NodeB, referred to as NB for short) in a WCDMA system, may be an evolved base station (evolved NodeB, referred to as eNB for short), an access point (access point, AP), or a relay station in an LTE system, or may be a base station in a 5G system, or the like.

The network device includes a processor and a memory. The memory stores computer-executable instructions. The processor executes the computer-executable instructions stored in the memory, to enable a terminal device to perform the method according to the second aspect.

According to a seventh aspect, an embodiment of this application provides a computer-readable storage medium. The computer-readable storage medium stores a computer program. When the computer program is executed by a processor, the method according to the first aspect and the second aspect is implemented.

According to an eighth aspect, an embodiment of this application provides a computer program product. The computer program product includes a computer program. When the computer program is run, a computer is enabled to perform the method according to the first aspect and the second aspect.

According to a ninth aspect, an embodiment of this application provides a chip. The chip includes a processor. The processor is configured to invoke a computer program in a memory to perform the method according to the first aspect and the second aspect.

It should be understood that the technical solutions in the second aspect to the fifth aspect of this application correspond to the technical solution in the first aspect of this application, and beneficial effects achieved in the aspects and corresponding feasible implementations are similar. Details are not described again.

### BRIEF DESCRIPTION OF DRAWINGS

FIG. 1 is a diagram of a communication scenario according to an embodiment of this application;
FIG. 2 is a diagram of a frame periodicity according to an embodiment of this application;
FIG. 3 is a diagram of PUSCH splitting according to an embodiment of this application;
FIG. 4 is a diagram of CG1 PUSCH splitting according to an embodiment of this application;
FIG. 5 is a diagram of CG2 PUSCH splitting according to an embodiment of this application;
FIG. 6 is a diagram of UTO-UCI reporting according to an embodiment of this application;
FIG. 7 is a flowchart of a retransmission method according to an embodiment of this application;
FIG. 8 is a diagram 1 of implementation of PUSCH retransmission according to an embodiment of this application;
FIG. 9 is a diagram 2 of implementation of PUSCH retransmission according to an embodiment of this application;
FIG. 10 is a diagram 3 of implementation of PUSCH retransmission according to an embodiment of this application;
FIG. 11 is a diagram 4 of implementation of PUSCH retransmission according to an embodiment of this application;
FIG. 12 is a diagram 5 of implementation of PUSCH retransmission according to an embodiment of this application;
FIG. 13 is a diagram 6 of implementation of PUSCH retransmission according to an embodiment of this application;
FIG. 14 is a diagram 1 of a structure of a retransmission apparatus according to an embodiment of this application;
FIG. 15 is a diagram 2 of a structure of a retransmission apparatus according to an embodiment of this application;
FIG. 16 is a diagram of a structure of a terminal device according to an embodiment of this application; and
FIG. 17 is a diagram of a structure of a network device according to an embodiment of this application.

### DESCRIPTION OF EMBODIMENTS

For ease of understanding, related concepts in this application are first explained and described.

Terminal device: The terminal device may be a device that has a wireless transceiver function and can cooperate with a network device to provide a communication service for a user. Specifically, the terminal device may be a user equipment (User Equipment, UE), an access terminal, a subscriber unit, a subscriber station, a mobile station, a remote station, a remote terminal, a mobile device, a user terminal, a terminal, a wireless communication device, a user agent, or a user apparatus. For example, the terminal device may be a cellular phone, a cordless telephone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, or a terminal device in a 5G network or a network after 5G.

Network device: The network device may be a device configured to communicate with the terminal device, for example, may be a base station (Base Transceiver Station, BTS) in a global system for mobile communication (Global System for Mobile Communication, GSM) or code division multiple access (Code Division Multiple Access, CDMA) communication system, may be a base station (NodeB, NB) in a wideband code division multiple access (Wideband Code Division Multiple Access, WCDMA) system, or may be an evolved base station (Evolutional NodeB, eNB or eNodeB) in an LTE system, or the network device may be a relay station, an access point, an in-vehicle device, a wearable device, a network side device in a 5G network or a network after 5G, a network device in a future evolved public land mobile network (Public Land Mobile Network, PLMN) network, or the like.

The network device involved in embodiments of this application may also be referred to as a radio access network (Radio Access Network, RAN) device. The RAN device is connected to the terminal device, and is configured to receive data of the terminal device and send the data to a core network device. The RAN device corresponds to different devices in different communication systems, for example, corresponds to a base station and a base station controller in a 2G system, corresponds to a base station and a radio network controller (Radio Network Controller, RNC) in a 3G system, corresponds to an evolved base station (Evolutional Node B, eNB) in a 4G system, and corresponds to a 5G system in a 5G system, for example, an access network device (for example, a gNB, a central unit CU, and a distributed unit DU) in new radio (New Radio, NR).

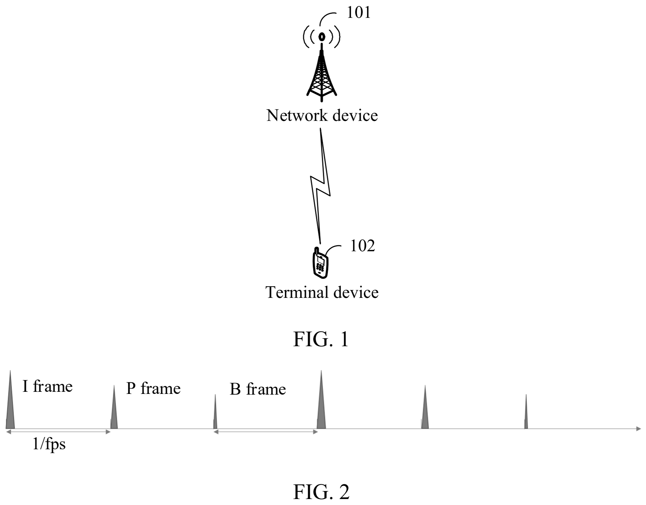

A scenario to which a communication method in this application is applicable is described below with reference to FIG. 1.

FIG. 1 is a diagram of a communication scenario according to an embodiment of this application. Refer to FIG. 1. A network device 101 and a terminal device 102 are included. The network device 101 and the terminal device 102 may perform wireless communication with each other. The terminal device 102 may communicate with at least one core network through a radio access network (Radio Access Network, RAN).

A communication system may be a global system for mobile communication (Global System for Mobile communication, referred to as GSM for short), a code division multiple access (Code Division Multiple Access, referred to as CDMA for short) system, a wideband code division multiple access (Wideband Code Division Multiple Access, referred to as WCDMA for short) system, a long term evolution (Long Term XR VR AR Evolution, referred to as LTE for short) system, or a fifth generation (5th-Generation, referred to as 5G for short) mobile communication system.

Correspondingly, the network device may be a base station (Base Transceiver Station, referred to as BTS for short) in the GSM system or the CDMA system, may be a base station (NodeB, referred to as NB for short) in the WCDMA system, may be an evolved base station (evolved NodeB, referred to as eNB for short), an access point (access point, AP), or a relay station in the LTE system, or may be a base station in the 5G system, or the like. This is not limited herein.

The 5G mobile communication system in this application includes a non-standalone (non-standalone, NSA) 5G mobile communication system and/or a standalone (standalone, SA) 5G mobile communication system. Technical solutions provided in this application are also applicable to a future communication system, for example, a sixth mobile communication system. The communication system may alternatively be a PLMN network, a device-to-device (device-to-device, D2D) network, a machine to machine (machine to machine, M2M) network, an IoT network, or another network.

It may be understood that if the technical solutions in embodiments of this application are applied to another wireless communication network, a corresponding name may be replaced with a name of a corresponding function in the another wireless communication network.

A network architecture and a service scenario described in embodiments of this application are intended to describe the technical solutions in embodiments of this application more clearly, and do not constitute a limitation on the technical solutions provided in embodiments of this application. A person of ordinary skill in the art may learn that with evolution of the network architecture and emergence of new service scenarios, the technical solutions provided in embodiments of this application are also applicable to similar technical problems.

The development of 5G technologies also drives progress of extended reality (extended reality, XR) services such as a virtual reality (virtual reality, VR) service, an augmented reality (augmented reality, AR) service, and a mixed reality (mixed reality, MR) service.

A scenario of the VR service is used as an example. In a virtual reality (virtual reality, VR) scenario, a frame has periodicity. A frame transmission periodicity may be understood with reference to FIG. 2. FIG. 2 is a diagram of a frame periodicity according to an embodiment of this application.

As shown in FIG. 2, in a VR scenario, uplink transmission of a video frame may be performed once at an interval of a fixed periodicity. The transmitted video frame may be, for example, an I frame (a key frame), a P frame (a forward reference frame), or a B frame (a bidirectional reference frame).

Refer to FIG. 2. It may be determined that a frame transmission periodicity is 1/fps, where fps is a quantity of transmitted frames per second (Frames Per Second). For example, if fps is 30, a corresponding frame transmission periodicity is 33.33 ms. For another example, if fps is 60, a corresponding frame transmission periodicity is 16.67 ms. For another example, if fps is 120, a corresponding frame transmission periodicity is 8.33 ms.

Currently, dynamic scheduling or semi-persistent scheduling may be used for uplink transmission.

For the dynamic scheduling, a network device needs to send DCI (Downlink Control Information, downlink control information) to a terminal device to configure an uplink resource, and then the terminal device sends a PUSCH (physical uplink shared channel, Physical Uplink Shared Channel) on the corresponding uplink resource.

However, for an XR service whose uplink data needs to be periodically sent, if the dynamic scheduling is used, the network device needs to send DCI a plurality of times. In addition, the XR service has a high requirement on a delay, and a plurality of signaling interactions in a dynamic scheduling process may also affect the delay.

The semi-persistent scheduling is a scheduling manner in which a transmission resource is periodically preconfigured. Therefore, the semi-persistent scheduling is most suitable for an XR service of a periodic type in terms of power consumption and a delay.

In the uplink transmission, there are the following two types of scheduling solutions without a dynamic grant, and a main difference lies in different activation manners.

Type 1 (Configured Grant type 1, CG1): In this solution, RRC (Radio Resource Control, radio resource control) signaling is used for configuring all parameters and activating the uplink transmission. The UE may send a PUSCH on a configured periodic uplink resource without activation by using the DCI, provided that an RRC configuration succeeds.

Type 2 (Configured Grant type 2, CG2): In this solution, the network device first configures a data transmission periodicity for the UE by using RRC signaling, then activates or releases an uplink CG by using a PDCCH (physical downlink control channel, Physical Downlink Control Channel) scrambled by using a CS-RNTI (Configured Scheduling Radio Network Temporary Identifier, configured scheduling radio network temporary identifier), and specifies a radio resource used by the uplink CG. Then, in each periodicity, the UE may use a CG resource to send a PUSCH.

By using the CG, periodic sending can be implemented without dynamic scheduling each time, which is suitable for a feature of the XR service. However, in the XR service, especially for a scenario like MR, service data of a video type needs to be sent in the uplink transmission, and the service data has large data volume and occupies many resources. If a CG resource in a periodicity is reserved for each UE based on maximum traffic volume of a single transmission, system capacity is very limited. For example, in an XR scenario, a system can support only approximately 10 UEs.

In this case, to improve the system capacity, the CG may be enhanced in the following two aspects.

In the first aspect, one PUSCH in a CG periodicity is split into a plurality of PUSCHs for sending.

In the second aspect, the UE may dynamically indicate a specific unused PUSCH in the CG periodicity.

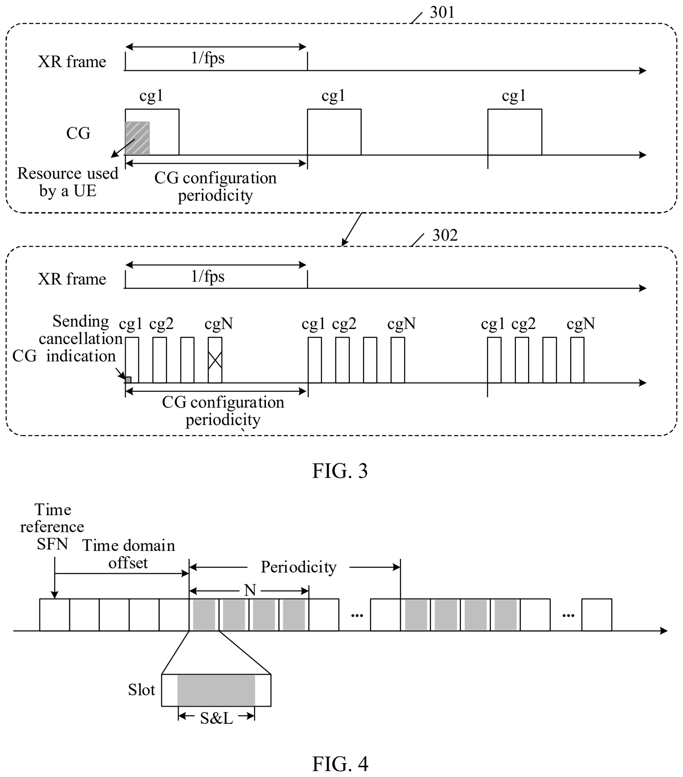

For example, refer to FIG. 3 for understanding. FIG. 3 is a diagram of PUSCH splitting according to an embodiment of this application.

In FIG. 3, 301 shows a case in which a CG resource in a periodicity is reserved for a UE based on maximum traffic volume of a single transmission. It may be understood with reference to 301 that, in each CG configuration periodicity, a same CG resource is reserved by using the maximum traffic volume as a standard.

A 1^{st} CG configuration periodicity is used as an example. A network device reserves a large quantity of CG resources for the terminal device. However, assuming that the UE performs uplink data transmission only on a CG resource shown in the gray part, a reserved CG resource outside the gray part is wasted.

Further refer to 302 in FIG. 3. One PUSCH in a CG periodicity may be split into a plurality of PUSCHs for sending. For example, by comparing 301 and 302, it may be understood that actually, quantities of CG resources reserved in the CG periodicity are the same. However, in 302, each CG configuration periodicity includes a plurality of CG resources with a small resource quantity, and each CG resource is used for transmission of one PUSCH.

In addition, assuming that a PUSCH sent on a CG resource 1 in the 1^{st} configuration periodicity may carry a sending cancellation indication, and the sending cancellation indication is used for indicating that the current UE does not use a 4^{th} CG resource, the network device may allocate the CG resource 4 to another UE for use.

In other words, through splitting and advance indication, the network device may dynamically allocate sending resources of some PUSCHs that are not used by a UE in a CG periodicity to another UE for use, so that system capacity is improved.

For the example in FIG. 3, it should be further noted that, in FIG. 3, the CG configuration periodicity and a frame transmission periodicity of an XR service are consistent. In an actual implementation process, the CG configuration periodicity may alternatively be inconsistent with the frame transmission periodicity of the XR service. This is not limited in this application.

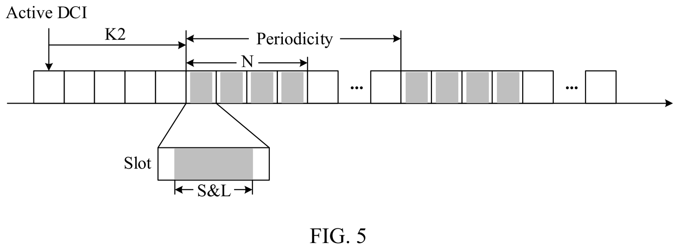

The following further describes, with reference to FIG. 4 and FIG. 5, cases of PUSCH splitting respectively corresponding to the foregoing two CG types. FIG. 4 is a diagram of CG1 PUSCH splitting according to an embodiment of this application. FIG. 5 is a diagram of CG2 PUSCH splitting according to an embodiment of this application.

In FIG. 4 and FIG. 5, one small white grid represents one slot (slot), and a gray filled part in a small white grid represents a CG resource.

Refer to FIG. 4. For the CG1, a time reference SFN (Time Reference SFN) and a time domain offset (Time Domain offset) are used for indicating a start position of a CG resource. In addition, each CG configuration periodicity includes N CG resources, where the N CG resources are resources at specified positions in N available slots (slots). For example, RRC may configure an S&L (start symbol & symbol length, start symbol & symbol length), so that the resources at the specified positions in the available slots may all be resources indicated by the S&L.

In addition, refer to FIG. 5. For the CG2, active DCI (active DCI) and a slot offset (K2) are used for indicating a start position of a CG resource. In addition, each CG configuration periodicity includes N CG resources, where the N CG resources are similar to those described in FIG. 4. A difference lies in that in the CG2, an S&L may be indicated by the active DCI, and the K2 is also indicated by the DCI.

The foregoing describes, with reference to FIG. 4 and FIG. 5, the cases of the PUSCH splitting respectively corresponding to the foregoing two CG types. It may be further determined with reference to the foregoing descriptions that currently, an enhancement in the second aspect further exists. To be specific, a UE may dynamically indicate an unused PUSCH in a periodicity.

A time domain position corresponding to a PUSCH may also be understood as a PUSCH TO (Transmission Occasion, transmission occasion). In this case, for example, newly-defined UCI (uplink control information, Uplink Control Information) may be used for indicating an unused PUSCH in a periodicity. The newly-defined UCI may be UTO-UCI, and a UTO is an unused CG PUSCH Transmission Occasion. The UTO-UCI may be sent a plurality of times in one CG periodicity, for example, sent in a plurality of PUSCHs in one periodicity.

If previously sent UTO-UCI indicates that a PUSCH TO is unused (not used or not sent), the PUSCH TO cannot be modified to be NOT unused (used or sent) later by sending UTO-UCI. For example, 1 indicates unused, and 0 indicates NOT unused. In this case, if the previously sent UTO-UCI indicates that a sending status of a PUSCH TO is 1, the sending status of the occasion cannot be changed to 0 later.

However, if the previously sent UTO-UCI indicates that a PUSCH TO is NOT unused (used or sent), the PUSCH TO nay be modified to be unused (not used or not sent) later by sending UTO-UCI. In other words, if the previously sent UTO-UCI indicates that a sending status of a PUSCH TO is 0, the sending status of the occasion may be modified to 1 later.

Simply, for a PUSCH TO indicated by the UE as NOT unused, the UE actually may or may not send a PUSCH on the TO. When determining not to send a PUSCH, the UE may indicate again by sending UTO-UCI in advance (namely, a case in which 0 is changed to 1). However, for a PUSCH TO indicated by the UE as unused, the UE cannot regret as long as the UE sends the indication, in other words, the UE cannot indicate again by sending updated UTO-UCI (in other words, 1 cannot be changed to 0).

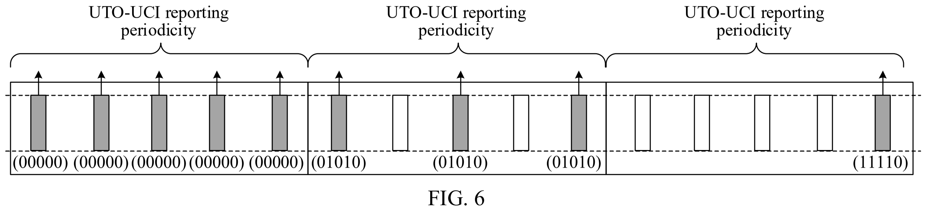

For example, refer to an indication of UTO-UCI in FIG. 6 for understanding. FIG. 6 is a diagram of UTO-UCI reporting according to an embodiment of this application.

As shown in FIG. 6, a UTO-UCI reporting periodicity may be configured. The UTO-UCI reporting periodicity may be consistent with or may not be consistent with the foregoing CG configuration periodicity. This is not limited in this application.

For example, it is assumed that in the current example, each UTO-UCI reporting periodicity includes five PUSCHs, and it is assumed that a UE carries UTO-UCI in each sent PUSCH.

Refer to FIG. 6. For a 1^{st} UTO-UCI reporting periodicity, if the five PUSCHs in the UTO-UCI reporting periodicity are all to be used by the UE, the UTO-UCI may be configured as 00000 (where 0 indicates to-be-used, and 1 indicates not to-be-used).

In addition, for a 2^{nd} UTO-UCI reporting periodicity, if a 1^{st}, 3^{rd}, and 5^{th} PUSCHs in the UTO-UCI reporting periodicity are to be used by the UE, and a 2^{nd} and 4^{th} PUSCHs in a CG periodicity are not to be used by the UE, the UTO-UCI may be configured as 01010. In addition, because the 2^{nd} PUSCH and the 4^{th} PUSCH in the CG periodicity are not to be used by the UE, the UE naturally does not send the two PUSCHs. In this way, UTO-UCI is correspondingly not transmitted on the two PUSCH TOs.

For a case in the 2^{nd} UTO-UCI reporting periodicity, if the UE has transmitted the UTO-UCI on the 1^{st} PUSCH to indicate that the 2^{nd} PUSCH and the 4^{th} PUSCH in the CG periodicity are not to be used, the UE cannot indicate, by using updated UTO-UCI, that the 2^{nd} PUSCH and the 4^{th} PUSCH in the CG periodicity need to be used.

However, although the UE has transmitted the UTO-UCI on the 1^{st} PUSCH to indicate that the 1^{st}, 3^{rd}, and 5^{th} PUSCHs need to be used, if the UE subsequently determines that the UE does not use the 5^{th} PUSCH either, the UE may send updated UTO-UCI on the 3^{rd} PUSCH to indicate that the 5^{th} PUSCH is not to be used.

The foregoing describes CG enhancement in two aspects. In this embodiment, for the first aspect, namely, a case of PUSCH splitting, the following problem is further proposed: When a transmission error occurs in a PUSCH and the PUSCH needs to be retransmitted, an existing method is scheduling retransmission by using DCI. In this case, a case in which a plurality of PUSCHs are obtained through splitting in each CG configuration periodicity is deduced. When a transmission error occurs in one or more PUSCHs and the one or more PUSCHs need to be retransmitted, single DCI needs to be used for scheduling retransmission of each to-be-retransmitted PUSCH. Consequently, signaling overheads of retransmission are increased, and power consumption of the terminal device is affected.

Based on this, this application provides the following technical concept: Retransmission scheduling of a plurality of PUSCHs in one CG configuration periodicity is implemented by using one piece of DCI signaling, so that the signaling overheads of the retransmission and system power consumption can be effectively reduced.

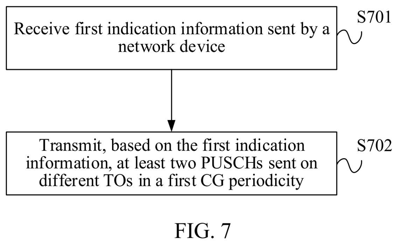

The following describes a retransmission method provided in this application with reference to specific embodiments. First, the retransmission method is described with reference to FIG. 7. FIG. 7 is a flowchart of a retransmission method according to an embodiment of this application.

As shown in FIG. 7, the method includes the following steps.

S701: Receive first indication information sent by a network device.

In this embodiment, when determining that there is a PUSCH that needs to be retransmitted by a terminal device, the network device may send the first indication information to the terminal device. The first indication information may be, for example, DCI. For example, the DCI may be scrambled by using a CS-RNTI.

Correspondingly, the terminal device may receive the first indication information sent by the network device.

S702: Transmit, based on the first indication information, at least two PUSCHs sent on different TOs in a first CG periodicity.

It may be determined based on the foregoing descriptions that, each CG periodicity of the terminal device includes a plurality of CG resources, in other words, includes a plurality of TOs. The terminal device may send PUSCHs on at least a part of the TOs in the CG periodicity, and needs to retransmit a PUSCH in which a transmission bit error occurs.

Any first CG periodicity is used as an example. The terminal device respectively sends PUSCHs on a plurality of TOs in the first CG periodicity. It is assumed that there are at least two PUSCHs that have a transmission bit error and that need to be retransmitted. However, in this embodiment, the first indication information may be used for implementing retransmission scheduling on a plurality of PUSCHs in one CG periodicity. Therefore, the at least two PUSCHs in the first CG periodicity may be retransmitted based on the first indication information sent by the network device. Based on the foregoing descriptions, it may be determined that the at least two PUSCHs that need to be retransmitted are sent on different TOs in the first CG periodicity.

A quantity of PUSCHs that need to be retransmitted, or specifically, PUSCHs for which retransmission needs to be performed depends on PUSCHs that have a transmission bit error in an actual transmission process. The quantity of PUSCHs that need to be retransmitted is not specifically limited in this embodiment.

The retransmission method provided in this embodiment of this application includes: receiving the first indication information sent by the network device; and retransmitting, based on the first indication information, the at least two PUSCHs sent on the different TOs in the first CG periodicity. Retransmission scheduling is performed on a plurality of PUSCHs in one CG periodicity by using the first indication information, so that signaling overheads of retransmission and system power consumption can be effectively reduced.

Based on the foregoing descriptions, the following describes a specific manner in which the first indication information is used for implementing retransmission scheduling of a plurality of PUSCHs.

In this embodiment, the first indication information may include at least one slot interval (K2) and at least one piece of time domain position indication information. The time domain position indication information may indicate, for example, the S&L described above.

The terminal device may determine a plurality of first slots based on the slot interval. In other words, it may also be understood as that the terminal device determines, based on the slot interval, first slots respectively corresponding to the to-be-retransmitted PUSCHs, to obtain the plurality of first slots.

In addition, the terminal device may separately determine, based on the time domain position indication information, respective first time domain resources in the plurality of first slots, and then separately retransmit the to-be-retransmitted PUSCHs based on the first time domain resources in the first slots.

For example, a first time domain resource in one slot is used for transmission of one PUSCH.

There may be a plurality of possible implementations of the slot interval and the time domain position indication information that are included in the first indication information. The following separately describes the various possible implementations.

In a possible implementation, the first indication information may include only one slot interval and one piece of time domain position indication information.

In this case, the plurality of first slots determined based on the slot interval include a start slot indicated by the slot interval and at least one available slot adjacent to the start slot. A start slot indicated by a slot interval K2 is a slot offset by K2 from a slot in which the first indication information is received.

The first time domain resources in the plurality of first slots are all indicated by the time domain position indication information included in the first indication information.

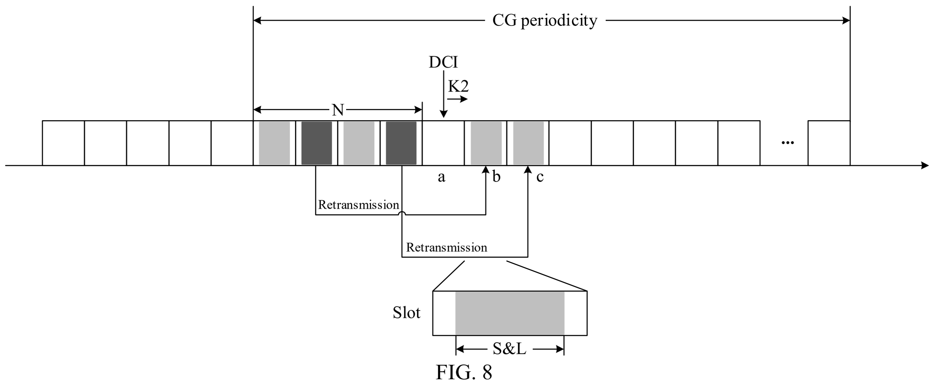

Refer to FIG. 8 for understanding. FIG. 8 is a diagram 1 of implementation of PUSCH retransmission according to an embodiment of this application.

As shown in FIG. 8, assuming that four PUSCHs are transmitted in a first CG periodicity, and a 2^{nd} PUSCH and a 4^{th} PUSCH in the CG periodicity need to be retransmitted, two first slots need to be determined.

Refer to FIG. 8. Assuming that a UE receives first indication information (DCI) in a slot a, and assuming that an offset between a slot b and the slot a is K2, the slot b is a start slot indicated by a slot interval K2. Therefore, the slot b may be determined as a first slot. In addition, in this embodiment, two first slots need to be determined. Therefore, an available slot located after the start slot and adjacent to the start slot is further determined as a first slot. For example, in FIG. 8, a slot c is located after the start slot and adjacent to the start slot. Assuming that the slot c is an available slot, the slot c may be determined as a first slot.

A plurality of determined first slots may correspond to a plurality of to-be-retransmitted PUSCHs, for example, in a sequential order. Therefore, after it is determined that the slot b and the slot c are first slots, in an example, the 2^{nd} PUSCH in the CG periodicity may be retransmitted by using the slot b, and the 4^{th} PUSCH in the CG periodicity may be retransmitted by using the slot c, to ensure correctness of a transmission sequence of the PUSCHs.

The available slot needs to be described herein. Slots may include an uplink slot and a downlink slot, and only the uplink slot may be used for transmission of a PUSCH. In addition, a case in which a slot is reserved by a network device for another purpose may occur. In this case, the slot is not an available slot for the current terminal device either. In this embodiment, the available slot may be understood as a slot that may be used for transmission of a PUSCH of the current terminal device.

Therefore, in this embodiment, only when an adjacent available slot located after the start slot is determined as a first slot, it can be ensured that the first slot can be used for retransmission of the PUSCH. Alternatively, in another possible implementation, any available slot located after the start slot may be determined as a first slot. In other words, the plurality of first slots are not required to be adjacent available slots.

After two first slots are determined, same time domain position indication information (S&L) is used for determining a first time domain resource in each of the first slots. For example, in the example in FIG. 8, first time domain resources in the two first slots, namely, the slot b and the slot c, are respectively determined based on the same S&L.

When the PUSCHs are retransmitted, a first slot resource in the slot b is used for retransmission of the 2^{nd} PUSCH in the CG periodicity, and a first slot resource in the slot c is used for retransmission of the 4^{th} PUSCH in the CG periodicity.

In another possible implementation, the first indication information may include only one slot interval, but include a plurality of pieces of time domain position indication information. The plurality of pieces of time domain position indication information sequentially correspond to the to-be-retransmitted PUSCHs.

In this case, the plurality of first slots determined based on the slot interval include a start slot indicated by the slot interval and at least one available slot adjacent to the start slot.

In addition, the time domain position indication information respectively corresponding to the PUSCHs is respectively used for indicating first time domain resources in first slots respectively corresponding to the PUSCHs.

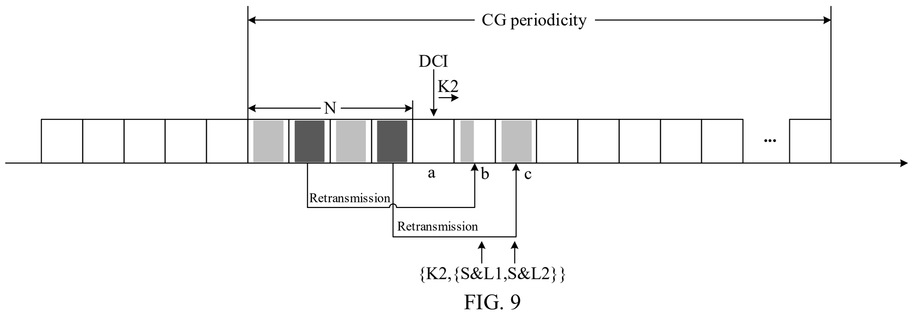

Refer to FIG. 9 for understanding. FIG. 9 is a diagram 2 of implementation of PUSCH retransmission according to an embodiment of this application.

As shown in FIG. 9, assuming that four PUSCHs are transmitted in a first CG periodicity, and a 2^{nd} PUSCH and a 4^{th} PUSCH in the CG periodicity need to be retransmitted, two first slots need to be determined.

An implementation of determining the first slot in FIG. 9 is similar to that described in FIG. 8. A slot b and a slot c are determined as first slots. Then, for example, the 2^{nd} PUSCH in the CG periodicity may be retransmitted by using the slot b, and the 4^{th} PUSCH in the CG periodicity may be retransmitted by using the slot c.

After the two first slots are determined, because first indication information indicates a plurality of S&Ls, first transmission resources need to be respectively determined in the two first slots based on S&Ls respectively corresponding to the two to-be-retransmitted PUSCHs.

Refer to FIG. 9. It is assumed that the first indication information DCI indicates two S&Ls: an S&L1 and an S&L2. The former S&L is an S&L corresponding to a 1^{st} to-be-retransmitted PUSCH, and the latter S&L is an S&L corresponding to a 2^{nd} to-be-retransmitted PUSCH. In other words, the plurality of S&Ls indicated by the DCI may sequentially correspond to the plurality of to-be-retransmitted PUSCHs.

In this way, a first time domain resource in a first slot corresponding to the 2^{nd} PUSCH in the CG periodicity, namely, the slot b in FIG. 9, is determined based on the S&L1. In addition, a first time domain resource in a first slot corresponding to the 4^{th} PUSCH in the CG periodicity, namely, the slot c in FIG. 9, is determined based on the S&L2.

In addition, the currently described implementation of configuring one K2 and a plurality of S&Ls by using the DCI theoretically should ensure that each to-be-retransmitted PUSCH has a corresponding S&L. However, if one or some to-be-retransmitted PUSCHs have no corresponding S&L, or the corresponding S&L is invalid, it implicitly indicates that an unused TO is used for retransmission. In other words, for a first PUSCH, in the plurality of to-be-retransmitted PUSCHs, that has no corresponding S&L or whose corresponding S&L is invalid, the first PUSCH is retransmitted by using a time domain resource corresponding to a TO that is not used by the UE.

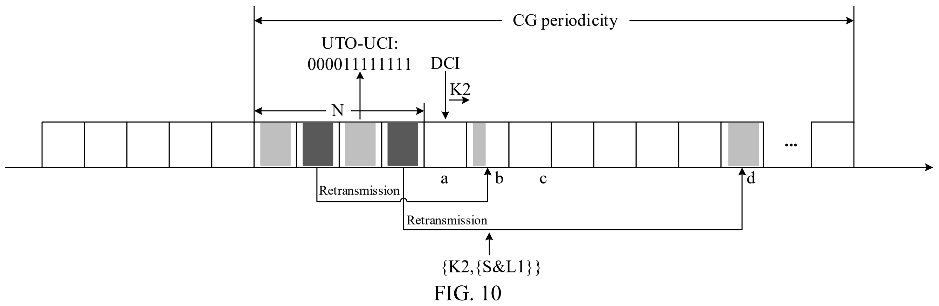

For example, refer to FIG. 10 for understanding. FIG. 10 is a diagram 3 of implementation of PUSCH retransmission according to an embodiment of this application.

As shown in FIG. 10, it is assumed that DCI indicates one K2 and one S&L, and the S&L sequentially corresponds to two to-be-retransmitted PUSCHs. In other words, a 2^{nd} PUSCH in a CG periodicity has a corresponding S&L, but a 4^{th} S&L in the CG periodicity has no corresponding S&L.

In this case, it implicitly indicates that the 4^{th} PUSCH in the CG periodicity is retransmitted by using an unused TO. Refer to FIG. 10. It is assumed that a UE includes UTO-UCI in a 3^{rd} PUSCH. If a last bit of the UTO-UCI includes M ones (M≥1), it indicates that there is an unused TO. In addition, in a possible implementation, the unused TO used for retransmission of the PUSCH in this embodiment is located after a transmission slot of the first indication information, to ensure that the unused TO can be used for the retransmission of the PUSCH.

In the example shown in FIG. 10, the UTO-UCI is carried in the 3^{rd} PUSCH to indicate 000011111111, so that it can be determined that there are a plurality of unused TOs after the transmission slot of the first indication information. For example, a time domain resource corresponding to a last unused TO indicated by the UTO-UCI may be used for retransmission of the 4^{th} PUSCH in the CG periodicity. For example, in other words, a time domain resource in a slot d shown in FIG. 10 is used for the retransmission of the 4^{th} PUSCH in the CG periodicity. The time domain resource in the slot d is indicated by an S&L in a CG configuration.

Alternatively, a time domain resource corresponding to any unused TO that is located after the transmission slot of the DCI and that is indicated by the UTO-UCI may be used for the retransmission of the 4^{th} PUSCH in the CG periodicity.

In this implementation, when determining that some unused TOs may be used for the retransmission of the PUSCHs, the network device may default values of some S&Ls, so that data volume of the first indication information is reduced and the signaling overheads are further reduced.

In another possible implementation, the first indication information may include a plurality of slot intervals and a plurality of pieces of time domain position indication information. The plurality of slot intervals sequentially correspond to the to-be-retransmitted PUSCHs, and the plurality of pieces of time domain position indication information sequentially correspond to the to-be-retransmitted PUSCHs.

For example, the first indication information may include a plurality of entries (entries). Each entry includes one K2 and one S&L. The plurality of entries sequentially correspond to the to-be-retransmitted PUSCHs, so that each PUSCH has a corresponding K2 and S&L.

In this case, a plurality of first slots determined based on the slot interval include slots respectively indicated by the slot intervals respectively corresponding to the PUSCHs.

In addition, the time domain position indication information respectively corresponding to the PUSCHs is respectively used for indicating first time domain resources in first slots respectively corresponding to the PUSCHs.

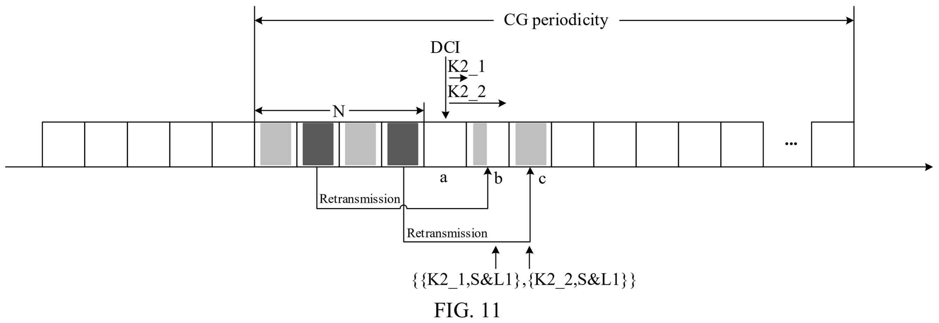

Refer to FIG. 11 for understanding. FIG. 11 is a diagram 4 of implementation of PUSCH retransmission according to an embodiment of this application.

As shown in FIG. 11, assuming that four PUSCHs are transmitted in a first CG periodicity, and a 2^{nd} PUSCH and a 4^{th} PUSCH in the CG periodicity need to be retransmitted, two first slots need to be determined.

In this embodiment, DCI indicates two K2: K2_1 and K2_2. The 2^{nd} PUSCH in the CG periodicity corresponds to K2_1, and a slot b is a slot indicated by the slot interval K2_1. Therefore, it may be determined that the slot b is a first slot corresponding to the 2^{nd} PUSCH in the CG periodicity. In addition, the DCI indicates two S&Ls: an S&L1 and an S&L2. The 2^{nd} PUSCH in the CG periodicity corresponds to K2_1. Therefore, a first time domain resource in the first slot b corresponding to the 2^{nd} PUSCH in the CG periodicity is determined based on the S&L1.

In addition, the 4^{th} PUSCH in the CG periodicity corresponds to K2_2, and a slot c is a slot indicated by the slot interval K2_2. Therefore, it may be determined that the slot c is a first slot corresponding to the 4^{th} PUSCH in the CG periodicity. The 4^{th} PUSCH in the CG periodicity corresponds to the S&L2 in the two S&Ls. Therefore, a first time domain resource in the first slot c corresponding to the 4^{th} PUSCH in the CG periodicity is determined based on the S&L2.

In addition, the currently described implementation of configuring a plurality of K2 and a plurality of S&Ls by using the DCI theoretically should ensure that each to-be-retransmitted PUSCH has a corresponding K2 and S&L. However, if one or some to-be-retransmitted PUSCHs have no corresponding K2 and/or S&L, or the corresponding K2 and/or S&L are/is invalid, it implicitly indicates that an unused TO is used for retransmission. In other words, for a second PUSCH, in the plurality of to-be-retransmitted PUSCHs, that has no corresponding K2 and/or S&L or whose corresponding K2 and/or S&L are/is invalid, the second PUSCH is retransmitted by using a time domain resource corresponding to a TO that is not used by a UE.

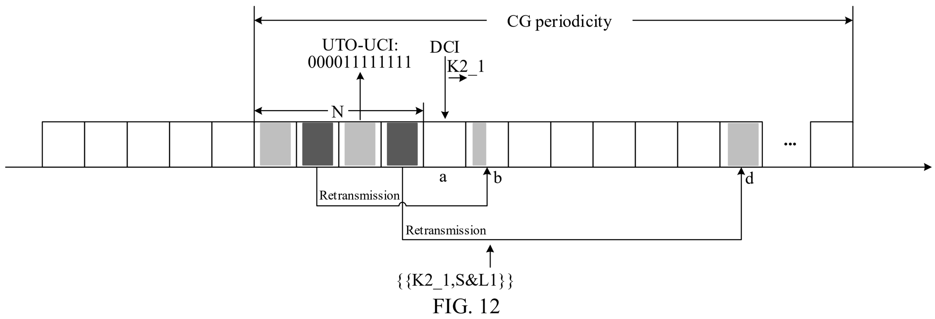

For example, refer to FIG. 12 for understanding. FIG. 12 is a diagram 5 of implementation of PUSCH retransmission according to an embodiment of this application.

As shown in FIG. 12, it is assumed that DCI indicates one entry, the entry includes one K2 and one S&L, and the entry sequentially corresponds to two to-be-retransmitted PUSCHs. In other words, a 2^{nd} PUSCH in a CG periodicity has a corresponding entry (including the K2 and the S&L), but a 4^{th} S&L has no corresponding entry (in other words, has no corresponding K2 or S&L).

In this case, it implicitly indicates that the 4^{th} PUSCH in the CG periodicity is retransmitted by using an unused TO. Refer to FIG. 12. It is assumed that a UE includes UTO-UCI in a 3^{rd} PUSCH. If a last bit of the UTO-UCI includes M ones (M≥1), it indicates that there is an unused TO. In addition, in a possible implementation, the unused TO used for retransmission of the PUSCH in this embodiment is located after a transmission slot of first indication information, to ensure that the unused TO can be used for the retransmission of the PUSCH.

In the example shown in FIG. 12, the UTO-UCI is carried in the 3^{rd} PUSCH to indicate 000011111111, so that it can be determined that there are a plurality of unused TOs after the transmission slot of the first indication information. For example, a time domain resource corresponding to a last unused TO indicated by the UTO-UCI may be used for retransmission of the 4^{th} PUSCH in the CG periodicity. It may be understood that, in other words, a time domain resource in the slot d shown in FIG. 10 is used for the retransmission of the 4^{th} PUSCH in the CG periodicity. The time domain resource in the slot d is indicated by an S&L in a CG configuration.

Alternatively, a time domain resource corresponding to any unused TO that is located after the transmission slot of the DCI and that is indicated by the UTO-UCI may be used for the retransmission of the 4^{th} PUSCH in the CG periodicity.

In this implementation, when determining that some unused TOs may be used for the retransmission of the PUSCHs, a network device may default values of some S&Ls and/or K2, so that data volume of the first indication information is reduced and signaling overheads are further reduced.

The foregoing describes a plurality of possible implementations in which first configuration information indicates the slot interval and the time domain position indication information, and a main difference lies in that resource indication manners for the to-be-retransmitted PUSCHs are different. According to the various possible implementations described above, resource scheduling for retransmission of a plurality of PUSCHs may be implemented based on one piece of first indication information, so that signaling overheads and system power consumption can be effectively reduced.

Based on the foregoing embodiments, the following further explains and describes the remaining content referred to in the DCI. In a possible implementation, the first indication information may further include a HARQ process number (HARQ Process number), where the HARQ process number is used for identifying a start PUSCH position indicated by an NDI.

The HARQ process number is equal to a HARQ (hybrid automatic repeat request, Hybrid Automatic Repeat reQuest) identity of a 1^{st} to-be-retransmitted PUSCH in a first CG periodicity. Alternatively, the HARQ process number is equal to a HARQ ID of a 1^{st} PUSCH in a first CG periodicity.

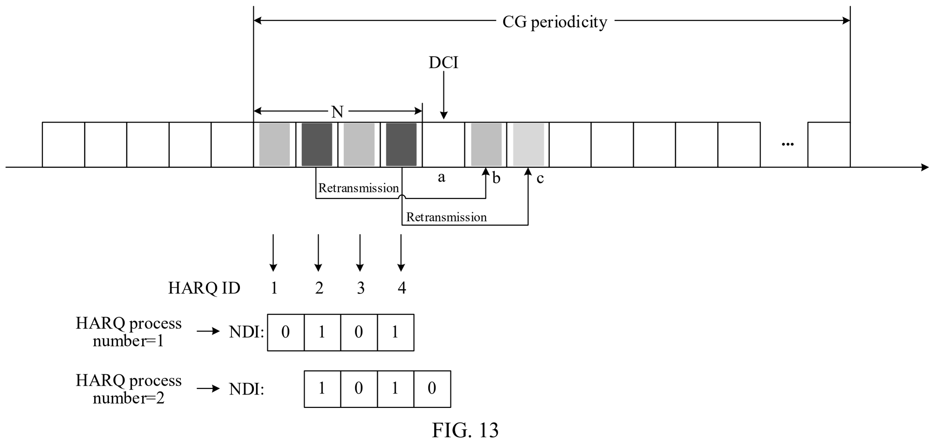

For example, refer to FIG. 13 for understanding. FIG. 13 is a diagram 6 of implementation of PUSCH retransmission according to an embodiment of this application.

As shown in FIG. 13, it is assumed that four PUSCHs are transmitted in a first CG periodicity, and a 2^{nd} PUSCH and a 4^{th} PUSCH in the CG periodicity need to be retransmitted. In addition, it is assumed that the 2^{nd} PUSCH in the CG periodicity is retransmitted by using a first time domain resource in a first slot b, and the 4^{th} PUSCH in the CG periodicity is retransmitted by using a first time domain resource in a first slot c. For an implementation of determining the first slot and the first time domain resource in the first slot, refer to any one of the foregoing three implementations. Details are not described herein again.

In addition, refer to FIG. 13. It is assumed that in the first CG periodicity, a HARQ ID (Identity, identity) of a 1^{st} PUSCH is 1, a HARQ ID of the 2^{nd} PUSCH is 2, a HARQ ID of a 3^{rd} PUSCH is 3, and a HARQ ID of the 4^{th} PUSCH is 4.

In this case, for the two implementations described above, specific cases of a HARQ process number are as follows:

For manner 1, to be specific, the HARQ process number is equal to a HARQ ID of a 1^{st} to-be-retransmitted PUSCH in the first CG periodicity, in the example in FIG. 13, because the 2^{nd} PUSCH in the first CG periodicity is the 1^{st} to-be-retransmitted PUSCH, and the HARQ ID of the 2^{nd} PUSCH is 2, it may be determined that the HARQ process number is equal to 2.

For manner 2, to be specific, when the HARQ process number is equal to a HARQ ID of a 1^{st} PUSCH in the first CG periodicity, in the example in FIG. 13, because the 1^{st} PUSCH in the first CG periodicity is the 1^{st} PUSCH, and the HARQ ID of the 1^{st} PUSCH is 1, it may be determined that the HARQ process number is equal to 1.

In addition, first indication information further includes an NDI (New data indicator, new data indicator). The different implementations of the HARQ process number described above affect a manner of determining the NDI. In this embodiment, the NDI includes N bits, where N is a quantity of TOs in the first CG periodicity.

The N bits in the NDI are sequentially used for indicating whether the PUSCHs in the first CG periodicity need to be retransmitted. For example, if a bit error occurs after a PUSCHs is sent, a bit corresponding to the PUSCH is 1, and is used for indicating that the PUSCH needs to be retransmitted. Alternatively, when a PUSCH is not sent or a bit error does not occur after the PUSCH is sent, a bit corresponding to the PUSCH is 0, and is used for indicating that the PUSCH does not need to be retransmitted.

The foregoing describes a case in which when a bit is 1, it indicates that a corresponding PUSCH needs to be retransmitted, and when a bit is 0, it indicates that a corresponding PUSCH does not need to be retransmitted. Alternatively, in another possible implementation, when a bit is 0, it indicates that a corresponding PUSCH needs to be retransmitted, and when a bit is 1, it indicates that a corresponding PUSCH does not need to be retransmitted. In an actual implementation process, a correspondence between a value of a bit and a specific meaning of whether to perform retransmission may be selected based on an actual requirement.

For example, an indication situation of the NDI in the foregoing two manners of determining the HARQ process number may be further described with reference to the example in FIG. 13. In the example in FIG. 13, the first CG periodicity includes four TOs, and correspondingly, the NDI includes four bits.

As shown in FIG. 13, for the manner 2 in which the HARQ process number is equal to the HARQ ID of the 1^{st} PUSCH in the first CG periodicity (in other words, the HARQ process number is equal to 1), in this case, a PUSCH whose HARQ ID is equal to the HARQ process number, in other words, is equal to 1 in the first CG periodicity is the 1^{st} PUSCH. In this case, the four bits in the NDI are sequentially used for indicating whether PUSCHs starting from the 1^{st} PUSCH in the first CG periodicity need to be retransmitted.

Refer to FIG. 13. A 1^{st} bit in the NDI is used for indicating whether the 1^{st} PUSCH (whose HARQ ID is equal to the HARQ process number) needs to be retransmitted. A 2^{nd} bit in the NDI is used for indicating whether the 2^{nd} PUSCH (whose HARQ ID is equal to the HARQ process number plus 1) needs to be retransmitted. A 3^{rd} bit in the NDI is used for indicating whether the 3^{rd} PUSCH (whose HARQ ID is equal to the HARQ process number plus 2) needs to be retransmitted. A 4^{th} bit in the NDI is used for indicating whether the 4^{th} PUSCH (whose HARQ ID is equal to the HARQ process number plus 3) needs to be retransmitted. In this way, NDI=0101 shown in FIG. 13 is obtained.

In addition, for the manner 1 in which the HARQ process number is equal to the HARQ ID of the 1^{st} to-be-retransmitted PUSCH in the first CG periodicity (in other words, the HARQ process number is equal to 2), in this case, a PUSCH whose HARQ ID is equal to the HARQ process number, in other words, is equal to 2 in the first CG periodicity is the 2^{nd} PUSCH. In this case, the four bits in the NDI are sequentially used for indicating whether PUSCHs starting from the 2^{nd} PUSCH in the first CG periodicity need to be retransmitted.

Refer to FIG. 13. A 1^{st} bit in the NDI is used for indicating whether the 2^{nd} PUSCH (whose HARQ ID is equal to the HARQ process number) needs to be retransmitted. A 2^{nd} bit in the NDI is used for indicating whether the 3^{rd} PUSCH (whose HARQ ID is equal to the HARQ process number plus 1) needs to be retransmitted. A 3^{rd} bit in the NDI is used for indicating whether the 4^{th} PUSCH (whose HARQ ID is equal to the HARQ process number plus 2) needs to be retransmitted. In addition, the first CG periodicity includes only four PUSCHs. Therefore, a 4^{th} bit in the NDI has no corresponding PUSCH that can be indicated. In this case, a zero-padding operation is performed on the 4^{th} bit. In other words, NDI=1010 shown in FIG. 13 is obtained.

The foregoing describes a case in which the NDI includes N bits. In another possible implementation, that retransmission is directly performed on a last PUSCH in each CG periodicity at least once without performing subsequent retransmission due to occurrence of a bit error may be further configured. Therefore, the NDI may alternatively include N-1 bits. In other words, the NDI does not need to indicate whether to retransmit the last PUSCH in the first CG periodicity. A remaining implementation is similar to that in the foregoing descriptions. Details are not described herein again.

The HARQ process number and the NDI are configured in the first indication information, so that whether the PUSCHs in the first CG periodicity need to be retransmitted can be effectively indicated. In this way, retransmission of a plurality of PUSCHs may be indicated by using one piece of indication information.

Further, the first indication information may further include a redundancy version (RV, Redundancy Version) field. A redundancy version may include at least two bit groups, and each bit group corresponds to one to-be-retransmitted PUSCH. Therefore, the bit groups are respectively used for indicating redundancy versions respectively corresponding to the PUSCHs. For example, the bit groups in the redundancy version may sequentially correspond to a plurality of to-be-retransmitted PUSCHs. One bit group may include one or two bits.

The foregoing embodiments describe specific indication manners of various possible fields included in the first indication information for retransmission scheduling of a plurality of PUSCHs. In addition, to flexibly configure whether the first indication information is specifically used for scheduling retransmission of a plurality of PUSCHs or retransmission of one PUSCH in one CG periodicity, the first indication information may further be correspondingly indicated by using configuration information.

In a possible implementation, a terminal device may receive first configuration information sent by a network device. The first configuration information may include a configuration parameter. The configuration parameter is used for indicating whether the first indication information is used for scheduling retransmission of a plurality of PUSCHs in one CG periodicity.

The first configuration information may be RRC signaling, and the configuration parameter may be MultiCgPuschHarq (multi-CG PUSCH retransmission).

For example, the configuration parameter may be an enumerated (ENUMERATED) value, and an enumerated value set of the configuration parameter includes only {enabled (enabled)}. In this case, when the configuration parameter MultiCgPuschHarq is set enabled, it indicates that retransmission of a plurality of PUSCHs in one CG periodicity is scheduled by using one piece of DCI, and when the configuration parameter MultiCgPuschHarq is set not enabled (no configuration indicates not enabled by default), it indicates that a conventional manner is used, in other words, retransmission of each PUSCH is scheduled by using separate DCI.

Alternatively, the configuration parameter may be set to a dynamic indication (MultiCgPuschHarq=dynamic), in other words, the configuration parameter is used for indicating to dynamically determine whether the first indication information is used for scheduling retransmission of a plurality of PUSCHs in one CG periodicity.

In this case, correspondingly, a T^{th} bit in a first field in the first indication information is used for dynamically indicating whether the first indication information is used for scheduling retransmission of a plurality of PUSCHs in one CG periodicity, where T is an integer greater than 0.

The first field may be, for example, the foregoing described HARQ process number. For example, the field of the HARQ process number has five bits in total. It is assumed that it is specified in advance that a highest bit of the HARQ process number is used for dynamically indicating whether the first indication information is used for scheduling retransmission of a plurality of PUSCHs in one CG periodicity. For example, the highest bit (a 1^{st} bit) of the HARQ process number is 1, indicating that the first indication information is used for scheduling retransmission of a plurality of PUSCHs in one CG periodicity. For example, the highest bit of the HARQ process number is 0, indicating that the first indication information is used for scheduling retransmission of a single PUSCH in one CG periodicity.

In addition, lengths of the NDI and the RV field in the DCI may be further determined based on an indication of the T^{th} bit in the first field. When the T^{th} bit in the first field indicates that the DCI is used for scheduling a plurality of PUSCHs, for the lengths of the NDI and the RV field in the DCI, refer to the descriptions in the foregoing embodiments. When the T^{th} bit in the first field indicates that the DCI is used for scheduling one PUSCH, for the lengths of the NDI and the RV field in the DCI, refer to a conventional implementation (the NDI is 1 bit, and the RV is 2 bits). In this way, data volume of the DCI can be flexibly adjusted based on an actual DCI scheduling situation.

In this case, correspondingly, the remaining four bits other than the highest bit in the field of the HARQ process number are used for indicating 16 HTTP IDs ranging from 0 to 15. This can meet a PUSCH HARQ indication requirement.

In an actual implementation process, the first field and the T^{th} bit in the first field may both be selected and set based on an actual requirement, provided that the UE and the network device agree in advance on a specific bit used for performing dynamic indication.

The specific DCI scheduling situation may be flexibly indicated by setting the configuration parameter, to be specific, whether the DCI is specifically used for scheduling retransmission of one PUSCH or for scheduling retransmission of a plurality of PUSCHs, so that a requirement of flexible scheduling in an actual implementation process can be met.

The foregoing embodiments describe related implementations on the terminal device side. On the network device side, the first indication information may be sent to the terminal device, to indicate the terminal device to implement retransmission scheduling on at least two PUSCHs based on the first indication information, and the corresponding network device may also receive, on a transmission resource indicated by the first indication information, a retransmitted PUSCH sent by the terminal device.

In addition, the network device may further send the first configuration information to the terminal device, to indicate whether the first indication information is used for retransmission scheduling on a plurality of PUSCHs in one CG periodicity.

Implementations of the first indication information and the first configuration information are similar to those in the foregoing embodiments on the terminal device side. Details are not described herein again.

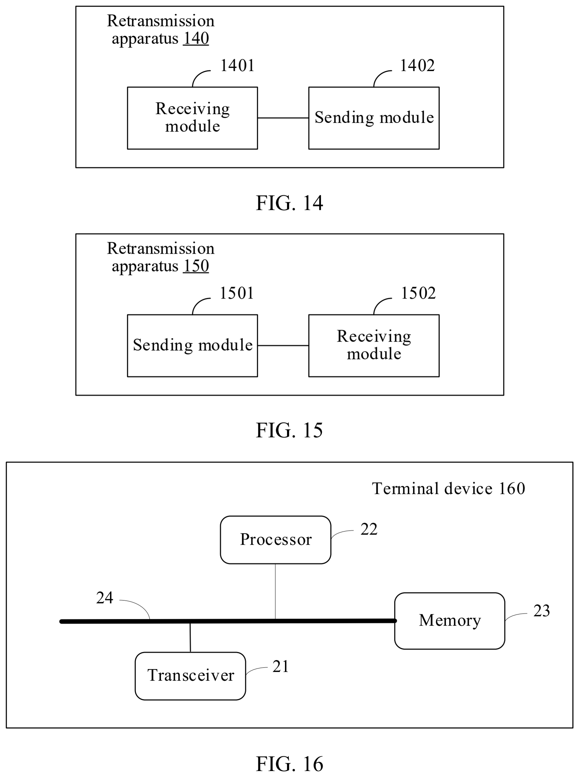

FIG. 14 is a diagram 1 of a structure of a retransmission apparatus according to an embodiment of this application. As shown in FIG. 14, the apparatus 140 includes a receiving module 1401 and a sending module 1402.

The receiving module 1401 is configured to receive first indication information sent by a network device.

The sending module 1402 is configured to retransmit, based on the first indication information, at least two physical uplink shared channels PUSCHs sent on different transmission occasions TOs in a first configured grant CG periodicity.

In a possible design, the first indication information includes at least one slot interval and at least one piece of time domain position indication information.

The sending module 1402 is specifically configured to:
determine a plurality of first slots based on the slot interval;
respectively determine first time domain resources in the plurality of first slots based on the time domain position indication information; and
respectively retransmit the PUSCHs based on the first time domain resources in the first slots.

In a possible design, the first indication information includes one slot interval and one piece of time domain position indication information.

The plurality of first slots include a start slot indicated by the slot interval and at least one available slot adjacent to the start slot, where the available slot is a slot used for uplink sending.

The first time domain resources in the plurality of first slots are all indicated by the time domain position indication information.

In a possible design, the first indication information includes one slot interval and time domain position indication information respectively corresponding to the PUSCHs.

The plurality of first slots include a start slot indicated by the slot interval and at least one available slot adjacent to the start slot.

The time domain position indication information respectively corresponding to the PUSCHs is respectively used for indicating first time domain resources in first slots respectively corresponding to the PUSCHs.

In a possible design, the first indication information includes slot intervals respectively corresponding to the PUSCHs and time domain position indication information respectively corresponding to the PUSCHs.

The plurality of first slots include slots respectively indicated by the slot intervals respectively corresponding to the PUSCHs.

The time domain position indication information respectively corresponding to the PUSCHs is respectively used for indicating first time domain resources in first slots respectively corresponding to the PUSCHs.

In a possible design, the sending module 1402 is further configured to:
retransmit, if a first PUSCH having no corresponding time domain position indication information exists in the at least two PUSCHs, the first PUSCH by using a time domain resource corresponding to an unused TO.

In a possible design, the sending module 1402 is further configured to:
retransmit, if a second PUSCH having no corresponding time domain position indication information and/or no corresponding slot interval exists in the at least two PUSCHs, the second PUSCH by using a time domain resource corresponding to an unused TO.

In a possible design, the first indication information further includes a hybrid automatic repeat request HARQ process number.

The HARQ process number is equal to a HARQ ID of a 1^{st} to-be-retransmitted PUSCH in the first CG periodicity.

Alternatively, the HARQ process number is equal to a HARQ ID of a 1^{st} PUSCH in the first CG periodicity.

In a possible design, the first indication information further includes a new data indicator NDI, the NDI includes N bits, the N bits are sequentially used for indicating whether each PUSCH starting from a third PUSCH in the first CG periodicity needs to be retransmitted, the third PUSCH is a PUSCH whose HARQ ID is equal to the HARQ process number, and N is a quantity of TOs in the first CG periodicity.

In a possible design, when an i^{th} bit in the NDI is 1, it indicates that a PUSCH corresponding to the i^{th} bit needs to be retransmitted.

When the i^{th} bit in the NDI is 0, it indicates that the PUSCH corresponding to the i^{th} bit does not need to be retransmitted, where a value range of i is 1 to N.

In a possible design, the first indication information further includes a redundancy version, the redundancy version includes at least two bit groups, and the bit groups are respectively used for indicating redundancy versions respectively corresponding to the PUSCHs.

In a possible design, the receiving module 1401 is further configured to:
receive first configuration information sent by the network device, where the first configuration information includes a configuration parameter, and the configuration parameter is used for indicating whether the first indication information is used for scheduling retransmission of a plurality of PUSCHs in one CG periodicity.

In a possible design, the configuration parameter is used for indicating that the first indication information is used for scheduling retransmission of a plurality of PUSCHs in one CG periodicity.

In a possible design, the configuration parameter is used for indicating to dynamically determine whether the first indication information is used for scheduling retransmission of a plurality of PUSCHs in one CG periodicity.

A T^{th} bit in a first field in the first indication information is used for dynamically indicating whether the first indication information is used for scheduling retransmission of a plurality of PUSCHs in one CG periodicity, where T is an integer greater than or equal to 0.

In a possible design, the first indication information is downlink control information DCI.

In a possible design, the first indication information is scrambled by using a configured scheduling radio network temporary identifier CS-RNTI.

In a possible design, the first configuration information is a radio resource control RRC message.

The apparatus provided in this embodiment may be configured to execute the technical solutions of the foregoing method embodiments. The implementation principles and technical effects thereof are similar, and details are not described again in this embodiment.

FIG. 15 is a diagram 2 of a structure of a retransmission apparatus according to an embodiment of this application. As shown in FIG. 15, the apparatus 150 includes a sending module 1501 and a receiving module 1502.

The sending module 1501 is configured to send first indication information to a terminal device.

The receiving module 1502 is configured to receive, based on the first indication information, at least two PUSCHs in a first CG periodicity that are retransmitted by the terminal device, where the at least two PUSCHs are PUSCHs sent on different TOs in the first CG periodicity.

In a possible design, the first indication information includes at least one slot interval and at least one piece of time domain position indication information.

The receiving module 1502 is specifically configured to:
determine a plurality of first slots based on the slot interval;
respectively determine first time domain resources in the plurality of first slots based on the time domain position indication information; and
respectively receive the retransmitted PUSCHs based on the first time domain resources in the plurality of first slots.

In a possible design, the first indication information includes one slot interval and one piece of time domain position indication information.

The plurality of first slots include a start slot indicated by the slot interval and at least one available slot adjacent to the start slot, where the available slot is a slot used for uplink sending.

The first time domain resources in the plurality of first slots are all indicated by the time domain position indication information.

In a possible design, the first indication information includes one slot interval and time domain position indication information respectively corresponding to the PUSCHs.

The plurality of first slots include a start slot indicated by the slot interval and at least one available slot adjacent to the start slot.

The time domain position indication information respectively corresponding to the PUSCHs is respectively used for indicating first time domain resources in first slots respectively corresponding to the PUSCHs.

In a possible design, the first indication information includes slot intervals respectively corresponding to the PUSCHs and time domain position indication information respectively corresponding to the PUSCHs.

The plurality of first slots include slots respectively indicated by the slot intervals respectively corresponding to the PUSCHs.

The time domain position indication information respectively corresponding to the PUSCHs is respectively used for indicating first time domain resources in first slots respectively corresponding to the PUSCHs.

In a possible design, the receiving module 1502 is further configured to:
receive, if a first PUSCH having no corresponding time domain position indication information exists in the at least two PUSCHs, the first PUSCH by using a time domain resource corresponding to an unused TO.

In a possible design, the receiving module 1502 is further configured to:
receive, if a second PUSCH having no corresponding time domain position indication information and/or no corresponding slot interval exists in the at least two PUSCHs, the second PUSCH by using a time domain resource corresponding to an unused TO.

In a possible design, the first indication information further includes a HARQ process number.

The HARQ process number is equal to a HARQ ID of a 1^{st} to-be-retransmitted PUSCH in the first CG periodicity.

Alternatively, the HARQ process number is equal to a HARQ ID of a 1^{st} PUSCH in the first CG periodicity.

In a possible design, the first indication information further includes an NDI, the NDI includes N bits, the N bits are sequentially used for indicating whether each PUSCH starting from a third PUSCH in the first CG periodicity needs to be retransmitted, and the third PUSCH is a PUSCH whose HARQ ID is equal to the HARQ process number.

In a possible design, when an i^{th} bit in the NDI is 1, it indicates that a PUSCH corresponding to the i^{th} bit needs to be retransmitted.

When the i^{th} bit in the NDI is 0, it indicates that the PUSCH corresponding to the i^{th} bit does not need to be retransmitted, where a value range of i is 1 to N.

In a possible design, the first indication information further includes a redundancy version, the redundancy version includes at least two bit groups, and the bit groups are respectively used for indicating redundancy versions respectively corresponding to the PUSCHs.

In a possible design, the sending module 1501 is further configured to:
send first configuration information to the terminal device, where the first configuration information includes a configuration parameter, and the configuration parameter is used for indicating whether the first indication information is used for scheduling retransmission of a plurality of PUSCHs in one CG periodicity.

In a possible design, the configuration parameter is used for indicating that the first indication information is used for scheduling retransmission of a plurality of PUSCHs in one CG periodicity.

In a possible design, the configuration parameter is used for indicating to dynamically determine whether the first indication information is used for scheduling retransmission of a plurality of PUSCHs in one CG periodicity.

A T^{th} bit in a first field in the first indication information is used for dynamically indicating whether the first indication information is used for scheduling retransmission of a plurality of PUSCHs in one CG periodicity, where T is an integer greater than or equal to 0.

In a possible design, the first indication information is DCI.

In a possible design, the first indication information is scrambled by using a CS-RNTI.

In a possible design, the first configuration information is an RRC message.

The apparatus provided in this embodiment may be configured to execute the technical solutions of the foregoing method embodiments. The implementation principles and technical effects thereof are similar, and details are not described again in this embodiment.

The retransmission method provided in embodiments of this application may be applied to an electronic device having a communication function. The electronic device includes a terminal device. For a specific device form and the like of the terminal device, refer to the foregoing related descriptions. Details are not described herein.

FIG. 16 is a diagram of a structure of a terminal device according to an embodiment of this application. Refer to FIG. 16. The terminal device 160 may include a transceiver 21, a memory 22, and a processor 23. The transceiver 21 may include a transmitter and/or a receiver. The transmitter may also be referred to as a similar description such as a sender, a sending set, a sending port, or a sending interface. The receiver may also be referred to as a similar description such as a receiver, a receiving set, a receiving port, or a receiving interface. For example, the transceiver 21, the memory 22, and the processor 23 are connected to each other through a bus 24.

The memory 22 is configured to store program instructions. The processor 23 is configured to execute the program instructions stored in the memory, to enable the terminal device 120 to perform the configuration method for a multicast service in any one of the foregoing embodiments. A receiver of the transceiver 21 may be configured to perform a receiving function of the terminal device in the foregoing configuration method for a multicast service.

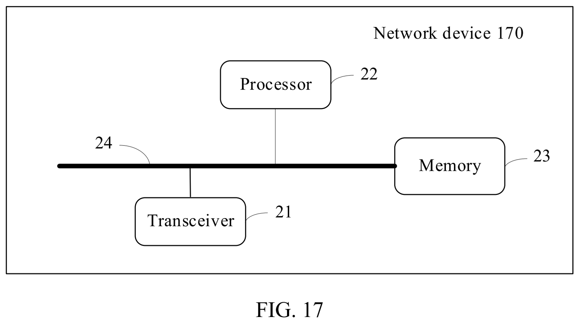

FIG. 17 is a diagram of a structure of a network device according to an embodiment of this application. Refer to FIG. 17. The network device 170 may include a transceiver 31, a memory 32, and a processor 33. The transceiver 31 may include a transmitter and/or a receiver. The transmitter may also be referred to as a similar description such as a sender, a sending set, a sending port, or a sending interface. The receiver may also be referred to as a similar description such as a receiver, a receiving set, a receiving port, or a receiving interface. For example, the transceiver 31, the memory 32, and the processor 33 are connected to each other through a bus 34.

The memory 32 is configured to store program instructions. The processor 33 is configured to execute the program instructions stored in the memory, to enable the network device 130 to perform the configuration method for a multicast service in any one of the foregoing embodiments. A receiver of the transceiver 31 may be configured to perform a receiving function of the network device in the foregoing configuration method for a multicast service.

An embodiment of this application provides a chip. The chip includes a processor, and the processor is configured to invoke a computer program in a memory, to perform the technical solutions in the foregoing embodiments. Implementation principles and technical effects thereof are similar to those in the related embodiments. Details are not described herein again.

An embodiment of this application further provides a computer-readable storage medium. The computer-readable storage medium stores a computer program. When the computer program is executed by a processor, the foregoing method is implemented. All or some of the methods described in the foregoing embodiments may be implemented by using software, hardware, firmware, or any combination thereof. If implemented by using software, a function may be stored on or transmitted on a computer-readable medium as one or more instructions or code. The computer-readable medium may include a computer storage medium and a communication medium, and may further include any medium that may transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disk memory, a magnetic disk memory or another magnetic storage device, or any other medium that is to carry or store required program code in the form of an instruction or a data structure, and may be accessed by a computer. In addition, any connection is appropriately referred to as a computer-readable medium. For example, if software is transmitted from a website, a server or another remote source by using a coaxial cable, an optical fiber cable, a twisted pair, a digital subscriber line (Digital Subscriber Line, DSL) or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc, a laser disc, an optical disc, a digital versatile disc (Digital Versatile Disc, DVD), a floppy disk, and a blue ray disc, where the magnetic disk generally reproduces data in a magnetic manner, and the optical disc reproduces data optically by using laser. The foregoing combination should also be included in the scope of the computer-readable medium.

An embodiment of this application provides a computer program product. The computer program product includes a computer program, and when the computer program is run, a computer is enabled to perform the foregoing method.

Embodiments of this application are described with reference to the flowcharts and/or block diagrams of the method, the device (system), and the computer program product according to embodiments of this application. It should be understood that computer program instructions may be used for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processing unit of another programmable device to generate a machine, so that the instructions executed by a computer or another programmable data processing device generate an apparatus for implementing a specific function in one or more procedures in the flowcharts and/or in one or more blocks in the block diagrams.

The foregoing specific implementations further describe the objectives, technical solutions, and beneficial effects of the present invention in detail. It should be understood that the foregoing descriptions are merely specific implementations of the present invention, but are not intended to limit the protection scope of the present invention. Any modification, equivalent replacement, or improvement made based on the technical solutions of the present invention should fall within the protection scope of the present invention.

## Claims

1. A retransmission method, applied to a terminal device, wherein the method comprises:
receiving first indication information sent by a network device; and
retransmitting, based on the first indication information, at least two physical uplink shared channels PUSCHs sent on different transmission occasions TOs in a first configured grant CG periodicity.

2. The method according to claim 1, wherein the first indication information comprises at least one slot interval and at least one piece of time domain position indication information; and
the retransmitting, based on the first indication information, the at least two physical uplink shared channels PUSCHs sent on the different transmission occasions TOs in the first configured grant CG periodicity comprises:
determining a plurality of first slots based on the slot interval;
respectively determining first time domain resources in the plurality of first slots based on the time domain position indication information; and
respectively retransmitting the PUSCHs based on the first time domain resources in the first slots.

3. The method according to claim 2, wherein the first indication information comprises one slot interval and one piece of time domain position indication information;
the plurality of first slots comprise a start slot indicated by the slot interval and at least one available slot adjacent to the start slot, wherein the available slot is a slot used for uplink sending; and
the first time domain resources in the plurality of first slots are all indicated by the time domain position indication information.

4. The method according to claim 2, wherein the first indication information comprises one slot interval and time domain position indication information respectively corresponding to the PUSCHs;
the plurality of first slots comprise a start slot indicated by the slot interval and at least one available slot adjacent to the start slot; and
the time domain position indication information respectively corresponding to the PUSCHs is respectively used for indicating first time domain resources in first slots respectively corresponding to the PUSCHs.

5. The method according to claim 2, wherein the first indication information comprises slot intervals respectively corresponding to the PUSCHs and time domain position indication information respectively corresponding to the PUSCHs;
the plurality of first slots comprise slots respectively indicated by the slot intervals respectively corresponding to the PUSCHs; and
the time domain position indication information respectively corresponding to the PUSCHs is respectively used for indicating first time domain resources in first slots respectively corresponding to the PUSCHs.

6. The method according to claim 4, wherein the method further comprises:
retransmitting, if a first PUSCH having no corresponding time domain position indication information exists in the at least two PUSCHs, the first PUSCH by using a time domain resource corresponding to an unused TO.

7. The method according to claim 5, wherein the method further comprises:
retransmitting, if a second PUSCH having no corresponding time domain position indication information and/or no corresponding slot interval exists in the at least two PUSCHs, the second PUSCH by using a time domain resource corresponding to an unused TO.

8. The method according to any one of claims 1 to 7, wherein the first indication information further comprises a hybrid automatic repeat request HARQ process number, wherein
the HARQ process number is equal to a HARQ ID of a 1^{st} to-be-retransmitted PUSCH in the first CG periodicity; or
the HARQ process number is equal to a HARQ ID of a 1^{st} PUSCH in the first CG periodicity.

9. The method according to claim 8, wherein the first indication information further comprises a new data indicator NDI, the NDI comprises N bits, the N bits are sequentially used for indicating whether each PUSCH starting from a third PUSCH in the first CG periodicity needs to be retransmitted, the third PUSCH is a PUSCH whose HARQ ID is equal to the HARQ process number, and N is a quantity of TOs in the first CG periodicity.

10. The method according to claim 9, wherein when an i^{th} bit in the NDI is 1, it indicates that a PUSCH corresponding to the i^{th} bit needs to be retransmitted; and
when the i^{th} bit in the NDI is 0, it indicates that the PUSCH corresponding to the i^{th} bit does not need to be retransmitted, wherein a value range of i is 1 to N.

11. The method according to any one of claims 1 to 10, wherein the first indication information further comprises a redundancy version, the redundancy version comprises at least two bit groups, and the bit groups are respectively used for indicating redundancy versions respectively corresponding to the PUSCHs.

12. The method according to any one of claims 1 to 11, wherein the method further comprises:
receiving first configuration information sent by the network device, wherein the first configuration information comprises a configuration parameter, and the configuration parameter is used for indicating whether the first indication information is used for scheduling retransmission of a plurality of PUSCHs in one CG periodicity.

13. The method according to claim 12, wherein the configuration parameter is used for indicating that the first indication information is used for scheduling retransmission of a plurality of PUSCHs in one CG periodicity.

14. The method according to claim 12, wherein the configuration parameter is used for indicating to dynamically determine whether the first indication information is used for scheduling retransmission of a plurality of PUSCHs in one CG periodicity; and
a T^{th} bit in a first field in the first indication information is used for dynamically indicating whether the first indication information is used for scheduling retransmission of a plurality of PUSCHs in one CG periodicity, wherein T is an integer greater than or equal to 0.

15. The method according to any one of claims 1 to 14, wherein the first indication information is downlink control information DCI.

16. The method according to any one of claims 1 to 15, wherein the first indication information is scrambled by using a configured scheduling radio network temporary identifier CS-RNTI.

17. The method according to any one of claims 12 to 16, wherein the first configuration information is a radio resource control RRC message.

18. A retransmission method, applied to a network device, wherein the method comprises:
sending first indication information to a terminal device; and
receiving, based on the first indication information, at least two PUSCHs in a first CG periodicity that are retransmitted by the terminal device, wherein the at least two PUSCHs are PUSCHs sent on different TOs in the first CG periodicity.

19. The method according to claim 18, wherein the first indication information comprises at least one slot interval and at least one piece of time domain position indication information; and
the receiving, based on the first indication information, the at least two PUSCHs in the first CG periodicity that are retransmitted by the terminal device comprises:
determining a plurality of first slots based on the slot interval;
respectively determining first time domain resources in the plurality of first slots based on the time domain position indication information; and
respectively receiving the retransmitted PUSCHs based on the first time domain resources in the plurality of first slots.

20. The method according to claim 19, wherein the first indication information comprises one slot interval and one piece of time domain position indication information;
the plurality of first slots comprise a start slot indicated by the slot interval and at least one available slot adjacent to the start slot, wherein the available slot is a slot used for uplink sending; and
the first time domain resources in the plurality of first slots are all indicated by the time domain position indication information.

21. The method according to claim 19, wherein the first indication information comprises one slot interval and time domain position indication information respectively corresponding to the PUSCHs;
the plurality of first slots comprise a start slot indicated by the slot interval and at least one available slot adjacent to the start slot; and
the time domain position indication information respectively corresponding to the PUSCHs is respectively used for indicating first time domain resources in first slots respectively corresponding to the PUSCHs.

22. The method according to claim 19, wherein the first indication information comprises slot intervals respectively corresponding to the PUSCHs and time domain position indication information respectively corresponding to the PUSCHs;
the plurality of first slots comprise slots respectively indicated by the slot intervals respectively corresponding to the PUSCHs; and
the time domain position indication information respectively corresponding to the PUSCHs is respectively used for indicating first time domain resources in first slots respectively corresponding to the PUSCHs.

23. The method according to claim 21, wherein the method further comprises:
receiving, if a first PUSCH having no corresponding time domain position indication information exists in the at least two PUSCHs, the first PUSCH by using a time domain resource corresponding to an unused TO.

24. The method according to claim 22, wherein the method further comprises:
receiving, if a second PUSCH having no corresponding time domain position indication information and/or no corresponding slot interval exists in the at least two PUSCHs, the second PUSCH by using a time domain resource corresponding to an unused TO.

25. The method according to any one of claims 18 to 24, wherein the first indication information further comprises a HARQ process number, wherein
the HARQ process number is equal to a HARQ ID of a 1^{st} to-be-retransmitted PUSCH in the first CG periodicity; or
the HARQ process number is equal to a HARQ ID of a 1^{st} PUSCH in the first CG periodicity.

26. The method according to claim 25, wherein the first indication information further comprises an NDI, the NDI comprises N bits, the N bits are sequentially used for indicating whether each PUSCH starting from a third PUSCH in the first CG periodicity needs to be retransmitted, the third PUSCH is a PUSCH whose HARQ ID is equal to the HARQ process number, and N is a quantity of TOs in the first CG periodicity.

27. The method according to claim 26, wherein when an i^{th} bit in the NDI is 1, it indicates that a PUSCH corresponding to the i^{th} bit needs to be retransmitted; and
when the i^{th} bit in the NDI is 0, it indicates that the PUSCH corresponding to the i^{th} bit does not need to be retransmitted, wherein a value range of i is 1 to N.

28. The method according to any one of claims 18 to 27, wherein the first indication information further comprises a redundancy version, the redundancy version comprises at least two bit groups, and the bit groups are respectively used for indicating redundancy versions respectively corresponding to the PUSCHs.

29. The method according to any one of claims 18 to 28, wherein the method further comprises:
sending first configuration information to the terminal device, wherein the first configuration information comprises a configuration parameter, and the configuration parameter is used for indicating whether the first indication information is used for scheduling retransmission of a plurality of PUSCHs in one CG periodicity.

30. The method according to claim 29, wherein the configuration parameter is used for indicating that the first indication information is used for scheduling retransmission of a plurality of PUSCHs in one CG periodicity.

31. The method according to claim 29, wherein the configuration parameter is used for indicating to dynamically determine whether the first indication information is used for scheduling retransmission of a plurality of PUSCHs in one CG periodicity; and
a T^{th} bit in a first field in the first indication information is used for dynamically indicating whether the first indication information is used for scheduling retransmission of a plurality of PUSCHs in one CG periodicity, wherein T is an integer greater than or equal to 0.

32. The method according to any one of claims 18 to 31, wherein the first indication information is DCI.

33. The method according to any one of claims 18 to 32, wherein the first indication information is scrambled by using a CS-RNTI.

34. The method according to any one of claims 29 to 33, wherein the first configuration information is an RRC message.

35. A retransmission apparatus, comprising:
a receiving module, configured to receive first indication information sent by a network device; and
a sending module, configured to retransmit, based on the first indication information, at least two physical uplink shared channels PUSCHs sent on different transmission occasions TOs in a first configured grant CG periodicity.

36. A retransmission apparatus, comprising:
a sending module, configured to send first indication information to a terminal device; and
a receiving module, configured to receive, based on the first indication information, at least two PUSCHs in a first CG periodicity that are retransmitted by the terminal device, wherein the at least two PUSCHs are PUSCHs sent on different TOs in the first CG periodicity.

37. A terminal device, comprising a processor and a memory, wherein
the memory stores computer-executable instructions; and
the processor executes the computer-executable instructions stored in the memory, to enable the terminal device to perform the method according to any one of claims 1 to 17.

38. A network device, comprising a processor and a memory, wherein
the memory stores computer-executable instructions; and
the processor executes the computer-executable instructions stored in the memory, to enable the network device to perform the method according to any one of claims 18 to 34.

39. A computer-readable storage medium, wherein the computer-readable storage medium stores a computer program, and when the computer program is executed by a processor, the method according to any one of claims 1 to 34 is implemented.

40. A computer program product, comprising a computer program, wherein when the computer program is run, a computer is enabled to perform the method according to any one of claims 1 to 34.
